(19) **Europäisches Patentamt / European Patent Office / Office européen des brevets**

(11) **EP 4 667 508 A1**

(12) **EUROPEAN PATENT APPLICATION**
published in accordance with Art. 153(4) EPC

(43) Date of publication:
**24.12.2025 Bulletin 2025/52**

(21) Application number: **24757050.0**

(22) Date of filing: **22.01.2024**

(51) International Patent Classification (IPC):
*C08G 63/78* $^{(2006.01)}$    *C08G 63/16* $^{(2006.01)}$
*C08L 67/02* $^{(2006.01)}$

(52) Cooperative Patent Classification (CPC):
**C08G 63/16; C08G 63/78; C08L 67/02**

(86) International application number:
**PCT/KR2024/001010**

(87) International publication number:
**WO 2024/172319 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.02.2023 KR 20230020346**

(71) Applicant: **SK Chemicals Co., Ltd.**
**Seongnam-si, Gyeonggi-do 13494 (KR)**

(72) Inventors:
• **HWANG, Da-Young**
  **Seongnam-si, Gyeonggi-do 13494 (KR)**
• **LEE, Yoo Jin**
  **Seongnam-si, Gyeonggi-do 13494 (KR)**

(74) Representative: **Dehns**
**10 Old Bailey**
**London EC4M 7NG (GB)**

(54) **POLYESTER RESIN, METHOD FOR MANUFACTURING SAME, AND ARTICLE PRODUCED THEREFROM**

(57) The present invention relates to a polyester resin, a method for manufacturing same, and an article produced therefrom. Specifically, the method for manufacturing a polyester resin comprises the steps of: (1) preparing a reaction raw material including a first glycol component and an acid component; (2) obtaining a first reactant by subjecting the reaction raw material to a primary esterification reaction; and (3) obtaining a second reactant by subjecting the first reactant to a secondary esterification reaction. The present invention can significantly reduce by-products generated during the process of manufacturing a polyester resin.

[Fig. 1]

## Description

### Technical Field

The present invention relates to a process for preparing a polyester resin in which the process residence time of a glycol component is controlled in the preparation of a polyester resin, to a polyester resin prepared by the preparation process, and to an article comprising the polyester resin.

### Background Art

Polyester, among polymers, is used as a material in various fields by virtue of its excellent mechanical strength, thermal resistance, transparency, and gas barrier properties. In particular, polyester films or plates prepared using a polyester resin have good transparency and excellent mechanical strength, so that they are widely used for cases, boxes, partitions, shelves, panels, packaging materials, building materials, interior and exterior materials, and the like.

Such a polyester resin may be prepared by a continuous process in which an acid component and a glycol component are subjected to direct esterification and/or transesterification in the presence of a polymerization catalyst, followed by polycondensation thereof. In order for the continuous process to be smoothly carried out, the fluidity of a slurry in which an acid component and a glycol component are mixed and the reactivity in each reaction process must be secured. For this purpose, the glycol component is commonly added in excess at the initial feeding step.

However, the glycol component fed in excess produces side reactants due to the influence of heat during each reaction process, which acts as a factor in deteriorating the quality of a polyester resin. In addition, an excessive amount of a glycol component used causes a problem in that the manufacturing cost of a polyester resin increases.

[Prior Art Document]

[Patent Document]

(Patent Document 1) Korean Laid-open Patent Publication No. 2014-0071536

### Disclosure of Invention

### Technical Problem

The present inventors have conducted various studies in order to solve the above-mentioned conventional problems. As a result, it has been discovered that when the process residence time of a glycol component is shortened in the preparation of a polyester resin through a continuous process, the generation of side reactants due to the thermal decomposition of the glycol component is minimized, thereby preparing a polyester resin with high quality.

Accordingly, an object of the present invention is to provide a polyester resin with high quality and a process for preparing the same.

In addition, another object of the present invention is to provide an article comprising the polyester resin.

### Solution to Problem

In order to accomplish the above object, the present invention provides a process for preparing a polyester resin that comprises (1) preparing a reaction raw material comprising a first glycol component and an acid component; (2) subjecting the reaction raw material to a first esterification reaction to obtain a first reactant; and (3) subjecting the first reactant to a second esterification reaction to obtain a second reactant, wherein at least one second glycol component having a carbon number of 2 or more is fed dividedly throughout steps (1) to (3), or fed dividedly throughout steps (2) and (3), or fed all at once in steps (3).

In addition, the present invention provides a polyester resin that is prepared by the above process.

In addition, the present invention provides an article that comprises the polyester resin.

### Advantageous Effects of Invention

In the continuous process for preparing a polyester resin in the present invention, a glycol component (a second glycol component) is fed dividedly to each reaction process (step) or fed all at once to the later reaction process (step) to prepare a polyester resin; thus, the process residence time of the glycol component is shortened, thereby minimizing the conversion of the glycol component into a side reactant due to the influence of heat in each reaction process.

Therefore, the present invention can provide a polyester resin with high quality (excellent color, moldability, or the like). As an article is prepared using such a polyester resin, it is possible to provide an article (e.g., a polyester film) with excellent physical properties.

Meanwhile, in the present invention glycol by-products (e.g., side reactants, unreacted glycol components, and the like) formed in each reaction process (step) are recovered and purified to obtain purified products, which are reused as a reaction raw material; thus, it is possible to prepare a polyester resin in an economical way.

**Brief Description of Drawing**

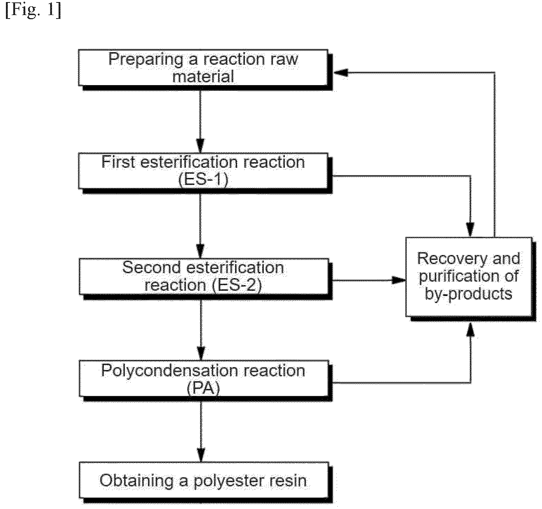

Fig. 1 is a flow chart showing the process of preparing a polyester resin according to an embodiment of the present invention.

**Best Mode for Carrying out the Invention**

Hereinafter, the present invention will be described in detail. The present invention herein is not limited to the disclosures given below, but it may be modified into various forms as long as the gist of the invention is not changed.

In the present specification, the term "comprising" is intended to specify a particular characteristic, region, step, process, element, and/or component. It does not exclude the presence or addition of any other characteristic, region, step, process, element and/or component, unless specifically stated to the contrary.

Throughout the present specification, the terms first, second, and the like are used to describe various components. But the components should not be limited by the terms. The terms are used for the purpose of distinguishing one element from another.

All numbers and expressions related to the quantities of components, reaction conditions, and the like used herein are to be understood as being modified by the term "about" unless otherwise indicated.

**Process for preparing a polyester resin**

The present invention provides a process for preparing a polyester resin in which the feeding point of a glycol component is controlled in order to shorten the process residence time of the glycol component. Specifically, the process for preparing a polyester resin according to the present invention comprises (1) preparing a reaction raw material comprising a first glycol component and an acid component; (2) subjecting the reaction raw material to a first esterification reaction to obtain a first reactant; and (3) subjecting the first reactant to a second esterification reaction to obtain a second reactant, wherein at least one second glycol component having a carbon number of 2 or more is fed dividedly throughout steps (1) to (3), or fed dividedly throughout steps (2) and (3), or fed all at once in steps (3).

The process for preparing a polyester resin according to the present invention optionally further comprises each of (4) subjecting the second reactant to polycondensation to obtain a third reactant comprising a polymer; and (5) recovering and purifying glycol by-products formed in any one or more of steps (2) to (4).

Hereinafter, the process for preparing a polyester resin according to the present invention will be described in detail with reference to Fig 1, as follows.

Step (1): Preparation of a reaction raw material

According to the present invention, step (1) is a step of preparing a reaction raw material comprising a first glycol component and an acid component. Specifically, step (1) may comprise feeding the first glycol component and the acid component to a predetermined container and mixing them, or feeding the first glycol component and the acid component to a continuous reactor, in which a first esterification reaction is carried out, and mixing them, to prepare a reaction raw material slurry.

The first glycol component may not be particularly limited as long as it is a compound having 2 or more carbon atoms (specifically, 2 to 10 carbon atoms) and two hydroxy groups (OH). Specifically, the first glycol component may comprise at least one selected from the group consisting of ethylene glycol, recycled ethylene glycol, diethylene glycol, 1,3-propanediol, 1,4-butanediol, 1,4-cyclohexanedimethanol, recycled 1,4-cyclohexanedimethanol, 2-methyl-1,3-propanediol, 2-ethyl-1,3-propanediol, 2-isopropyl-1,3-propanediol, 2,2-dimethyl-1,3-propanediol, recycled 2,2-dimethyl-1,3-propanediol, 2,3-butanediol, 3-methyl-1,5-pentanediol, 3-methyl-2,4-pentanediol, 1,6-hexanediol, 1,2-cyclohexanediol, 1,4-cyclohexanediol, bis-2-hydroxyethyl terephthalate, recycled bis-2-hydroxyethyl terephthalate, isosorbide, recycled isosorbide, cyclohexanedimethanol derivatives (e.g., 4-(hydroxymethyl)cyclohexylmethyl 4-(hydroxymethyl)cyclohexanecarboxylate; 4-(4-(hydroxymethyl)cyclohexylmethoxymethyl)cyclohexylmethanol, etc.), 2,2,4,4-tetramethyl-1,3-cyclobutanediol, polyethylene glycol, polypropylene glycol, polytetramethylene glycol, polyhexamethylene glycol, copolymers of ethylene oxide and tetrahydrofuran, ethylene oxide-adducted polypropylene glycol, polycarbonate diol, polyneopentyl glycol, poly-3-methylpentanediol, and poly-1,5-pentanediol. Preferably, the first glycol component may comprise ethylene glycol, which is economical and can increase the fluidity of the reaction raw material slurry.

The acid component may not be particularly limited as long as it is a compound having two carboxyl groups (COOH). Specifically, the acid component may comprise at least one selected from the group consisting of terephthalic acid, recycled terephthalic acid, isophthalic acid, dimethyl terephthalate, recycled dimethyl terephthalate, adipic acid, sebacic acid, succinic acid, isodecylsuccinic acid, maleic acid, fumaric acid, glutaric acid, azelaic acid, 1,4-cyclohexanedicarboxylic acid, 1,3-cyclohexanedicarboxylic acid, naphthalenedicarboxylic acid, diphenyldicarboxylic acid, 4,4'-stilbendicarboxylic acid, 2,5-furandicarboxylic acid, and 2,5-thiophenedicarboxylic acid. Preferably, the acid component may comprise at least one selected from the group consisting of terephthalic acid and isophthalic acid.

The reaction raw material comprising the first glycol component and the acid component may not comprise a second glycol component or may comprise the second glycol component to be fed dividedly, a detailed description of which will be provided below.

Meanwhile, in the preparation of the reaction raw material slurry, an additive comprising at least one selected from the group consisting of a catalyst, a stabilizer, a colorant, a crystallizing agent, an antioxidant, and a branching agent may be further employed as a raw material in additional to the reaction raw material.

The catalyst may be methylates of sodium and magnesium; acetates, borates, fatty acid salts, or carbonates of Zn, Cd, Mn, Co, Ca, and Ba; or oxides of Mg, Pb, Mn, Ti, Zn, Si, Sb, and Ge, or hydrates thereof. For example, the catalyst may be tetraethyl titanate, acetyltripropyl titanate, tetrapropyl titanate, tetrabutyl titanate, 2-ethylhexyl titanate, octylene glycol titanate, triethanolamine titanate, acetylacetonate titanate, ethylacetoacetic ester titanate, isostearyl titanate, titanium dioxide, germanium dioxide, germanium tetrachloride, germanium ethyleneglycoxide, germanium acetate, or combinations thereof.

As the stabilizer, a phosphorus-based compound such as phosphoric acid, trimethyl phosphate, and triethyl phosphate may be used.

As the colorant, organic compounds such as cobalt-based compounds, anthraquinone-based compounds, perinone-based compounds, azo-based compounds, and methine-based compounds (for example, cobalt acetate, cobalt propionate, Polysynthren Blue RLS toner of Clariant, and Solvaperm Red BB toner of Clariant) may be used.

As the crystallizing agent, a crystal nucleating agent, an ultraviolet absorber, a polyolefin resin, a polyamide resin, or the like may be used.

As the antioxidant, hindered phenol-based compounds, phosphite-based compounds, thioether-based compounds, or the like may be used.

As the branching agent, trimellitic anhydride, trimethylol propane, trimellitic acid, or the like may be used.

Step (2): First esterification reaction

According to the present invention, step (2) is a step of subjecting the reaction raw material to a first esterification reaction to obtain a first reactant. Specifically, step (2) may comprise a procedure of subjecting the reaction raw material continuously supplied to a first esterification reaction in a continuous reactor (first continuous reactor) to produce a first reactant comprising an oligomer (first oligomer).

The conditions under which the first esterification reaction is carried out may not be particularly limited. Specifically, the temperature at which the first esterification reaction is carried out may be 120 to 280°C, 140 to 280°C, 160 to 280°C, 180 to 278°C, 200 to 275°C, or 220 to 260°C. The pressure at which the first esterification reaction is carried out may be 0.1 to 5 kgf/cm$^2$, 0.2 to 4.5 kgf/cm$^2$, 0.3 to 4 kgf/cm$^2$, 0.4 to 3.5 kgf/cm$^2$, or 0.5 to 3 kgf/cm$^2$. The period of time during which the first esterification reaction is carried out may be 0.5 to 5 hours, 0.5 to 4 hours, 1 to 3.5 hours, or 1.5 to 3 hours. As the first esterification reaction is carried out under the above conditions, the production of side reactants (e.g., diethylene glycol-ester, etc.) is minimized while the desired oligomer can be obtained in high yield.

The molecular weight (Mn) of the oligomer contained in the first reactant is not particularly limited, but it may specifically be 855 to 3,000 g/mole, 870 to 2,600 g/mole, 885 to 2,000 g/mole, 900 to 1,600 g/mole, or 900 to 1,200 g/mole. As the molecular weight of the oligomer contained in the first reactant is within the above range, a polyester resin with high quality can be prepared in high yield.

A second glycol component, which is a component of the reaction raw material, may not be supplied in the first esterification reaction; alternatively, the second glycol component, which is to be fed dividedly, may be supplied. A detailed description thereof will be provided later.

According to the present invention, the first esterification reaction may be carried out with a molar ratio (G/A) of the glycol component and the acid component controlled to a specific range. Specifically, in the first esterification reaction, the G/A value according to the following Equation 2 may be 1.2 or less, 1.18 or less, 1.16 or less, 1.14 or less, 1.12 or less, or 1.1 or less. More specifically, the G/A value may be 0.88 to 1.2, 0.88 to 1.19, 0.89 to 1.18, 0.89 to 1.17, 0.90 to 1.16, 0.90 to 1.15, 0.91 to 1.14, 0.91 to 1.13, 0.92 to 1.12, or 0.92 to 1.1. As the G/A value is within the above range, the reactivity of the glycol components (first glycol component and second glycol component) is secured in the second esterification reaction, whereby it is possible to significantly reduce the occurrence of side reactions caused by heat.

G/A = (molar ratio of the first glycol component + molar ratio of the second glycol component)/molar ratio of the acid component　　　　　　　[Equation 2]

Meanwhile, side reactants, or by-products such as unreacted glycol components, formed in the procedure of step (2) may be discharged (taken out) from the continuous reactor and would not be subjected to the procedure of step (5), which will be described later. The side reactants may specifically be monohydroxyethyl terephthalate (MHET), bis-2-hydroxyethyl terephthalate (BHET), bis-2-hydroxyethyl terephthalate dimer (BHET dimer), diethylene glycol-ester (DEG-ester), or a cyclic compound, and the unreacted glycol component may be a first glycol component (e.g., ethylene glycol). As the side reactants or unreacted glycol components are discharged from the continuous reactor, it is possible to reduce the production of side reactants while the G/A value in the first esterification reaction is controlled. Meanwhile, the by-products may further comprise unreacted acid components (e.g., terephthalic acid).

Step (3): Second esterification reaction

According to the present invention, step (3) is a step of subjecting the first reactant to a second esterification reaction to obtain a second reactant. Specifically, step (3) may comprise a procedure of subjecting the first reactant to a second esterification reaction (transesterification reaction) in a continuous reactor (second continuous reactor) to produce a second reactant comprising an oligomer (second oligomer).

The conditions under which the second esterification reaction is carried out may not be particularly limited. Specifically, the temperature at which the second esterification reaction is carried out may be 150 to 280°C, 180 to 280°C, 210 to 275°C, 230 to 275°C, 240 to 270°C, or 250 to 265°C. The pressure at which the second esterification reaction is carried out may be 0.1 to 5 kgf/cm$^2$, 0.2 to 4.5 kgf/cm$^2$, 0.3 to 4 kgf/cm$^2$, 0.4 to 3.5 kgf/cm$^2$, or 0.5 to 3 kgf/cm$^2$. The period of time during which the second esterification reaction is carried out may be 2 to 9 hours, 3 to 8.5 hours, 3.5 to 8 hours, or 4 to 7.5 hours. As the second esterification reaction is carried out under the above conditions, the production of side reactants is minimized while the desired oligomer can be obtained in high yield.

The molecular weight (Mn) of the oligomer contained in the second reactant is not particularly limited, but it may specifically be 880 to 2,000 g/mole, 900 to 1,600 g/mole, 920 to 1,400 g/mole, 930 to 1,300 g/mole, or 940 to 1,250 g/mole. As the molecular weight of the oligomer contained in the second reactant is within the above range, a polyester resin with high quality can be prepared in high yield.

According to the present invention, the rate of change in molecular weight between the first reactant obtained through the first esterification reaction and the second reactant obtained through the second esterification reaction may be 90% or more. Specifically, in the present invention, the rate of change in molecular weight ($M_{RC}$) of the reactant according to the following Equation 1 may be 90% or more, 91% or more, 95% or more, 100% or more, 110% or more, 140% or more, 180% or more, 200% or more, or 220% or more. More specifically, the rate of change in molecular weight ($M_{RC}$) may be 90 to 230%, 90 to 220%, 91 to 190%, 100 to 170%, 100 to 160%, or 102 to 150%. The fact that the rate of change in molecular weight ($M_{RC}$) is 90% or more means that each esterification reaction is efficiently carried out, so that an oligomer with a molecular weight similar or equivalent to that of the oligomer contained in the first reactant is produced through the second esterification reaction. As a result, the present invention can provide a polyester resin with excellent quality.

$$[\text{Equation 1}]$$

$$M_{RC} = (Mn_1 / Mn_2) \times 100$$

$Mn_1$ is the number average molecular weight of the oligomer contained in the first reactant, and $Mn_2$ is the number average molecular weight of the oligomer contained in the second reactant.

Meanwhile, side reactants, or by-products such as unreacted glycol components, formed in the procedure of step (3) may be discharged (taken out) from the continuous reactor and would not be subjected to the procedure of step (5), which will be described later. The side reactants may specifically be monohydroxyethyl terephthalate (MHET), bis-2-hydroxyethyl terephthalate (BHET), bis-2-hydroxyethyl terephthalate dimer (BHET dimer), diethylene glycol-ester (DEG-ester), or a cyclic compound, and the unreacted glycol component may be a first glycol component (e.g., ethylene glycol). Meanwhile, the by-products may further comprise unreacted acid components (e.g., terephthalic acid).

According to the present invention, a second glycol component that is to be fed dividedly or all at once may be necessarily supplied in the second esterification reaction. That is, the first reactant obtained in step (2) and a second glycol component may be continuously supplied to the continuous reactor in which the second esterification reaction is carried out. In step (3), they may react to carry out a transesterification reaction.

Specifically, according to the present invention, at least one second glycol component having a carbon number of 2 or more may be dividedly fed throughout steps (1) to (3), or fed dividedly throughout steps (2) and (3), or fed all at once in steps (3). For example, when the total feeding amount of the second glycol component to be fed (supplied) to the entire preparation process is $G_1 + G_2 + G_3$, $G_1$, a portion of the total feeding amount, may be fed in step (1) where the reaction raw material is prepared, $G_2$, another portion of the total feeding amount, may be fed in step (2) where the first esterification reaction is carried out, and $G_3$, another portion of the total feeding amount, may be fed in step (3) where the second esterification reaction is carried out, in a divided manner. In addition, $G_1$, a portion of the total feeding amount, may be fed in step (2) where the first esterification reaction is carried out, and $G_2 + G_3$, another portion of the total feeding amount, may be fed in step (3) where the second esterification reaction is carried out, in a divided manner. In addition, $G_1 + G_2 + G_3$, the total feeding amount, may not be fed in steps (1) and (2), while it may be fed all at once in step (3), where the second esterification reaction is carried out. As the second glycol component is fed dividedly to each reaction step or fed all at once to the later reaction step, i.e., step (3), as described above, the process residence time of the second glycol component can be significantly shortened in a continuous process in which the reaction is carried out for a long period of time. As a result, as the thermal decomposition of the second glycol component is minimized to reduce the production of side-reactants, a polyester resin with high quality can be prepared.

According to the present invention, when the second glycol component is fed dividedly in two or more of steps (1) to (3), the second glycol component in an amount exceeding 20% by weight of the total feeding amount of the second glycol component may be fed in step (3). Specifically, the second glycol component in an amount equivalent to 25 to 99% by weight, 30 to 99% by weight, 35 to 99% by weight, 40 to 99% by weight, 50 to 95% by weight, or 70 to 95% by weight of the total feeding amount of the second glycol component (total feeding amount in the entire process) may be fed in step (3). As the feeding amount of the second glycol component is controlled, the process residence time of the second glycol component can be significantly shortened in a continuous process in which the reaction is carried out for a long period of time; thus, a polyester resin with high quality can be prepared.

The second glycol component may not be particularly limited as long as it is a compound having 2 or more carbon atoms (specifically, 3 to 10 carbon atoms) and two hydroxy groups (OH). Specifically, the second glycol component may comprise at least one selected from the group consisting of bis-2-hydroxyethyl terephthalate, recycled bis-2-hydroxyethyl terephthalate, isosorbide, recycled isosorbide, diethylene glycol, 1,3-propanediol, 1,4-butanediol, 1,4-cyclohexanedimethanol, recycled 1,4-cyclohexanedimethanol, 2-methyl-1,3-propanediol, 2-ethyl-1,3-propanediol, 2-isopropyl-1,3-propanediol, 2,2-dimethyl-1,3-propanediol, recycled 2,2-dimethyl-1,3-propanediol, 2,3-butanediol, 3-methyl-1,5-pentanediol, 3-methyl-2,4-pentanediol, 1,6-hexanediol, 1,2-cyclohexanediol, 1,4-cyclohexanediol, cyclohexanedimethanol derivatives (e.g., 4-(hydroxymethyl)cyclohexylmethyl 4-(hydroxymethyl)cyclohexanecarboxylate; 4-(4-(hydroxymethyl)cyclohexylmethoxymethyl)cyclohexylmethanol, etc.), 2,2,4,4-tetramethyl-1,3-cyclobutanediol, polyethylene glycol, polypropylene glycol, polytetramethylene glycol, polyhexamethylene glycol, copolymers of ethylene oxide and tetrahydrofuran, ethylene oxide-adducted polypropylene glycol, polycarbonate diol, polyneopentyl glycol, poly-3-methylpentanediol, and poly-1,5-pentanediol. Preferably, the second glycol component may comprise at least one selected from the group consisting of bis-2-hydroxyethyl terephthalate, recycled bis-2-hydroxyethyl terephthalate, isosorbide, diethylene glycol, and 1,4-cyclohexanedimethanol, in order to obtain a polyester resin with high quality in an economical way.

Recycled bis-2-hydroxyethyl terephthalate (r-BHET) among the second glycol components may have been obtained through depolymerization (e.g., glycolysis, hydrolysis, and methanolysis) of a waste polyester resin. Such r-BHET may be fed in a powder state, or dissolved in a solvent, when fed dividedly or all at once. For example, r-BHET may be fed as a r-BHET solution obtained by adding r-BHET to ethylene glycol (EG) or water and mixing them at 60 to 190°C. In such an event, the concentration of r-BHET contained in the r-BHET solution is not particularly limited, but it may be 50 to 95%.

Meanwhile, according to the present invention, steps (1) to (3) can be carried out continuously. As a result, a polyester resin can be prepared with high yield in an economical way.

Step (4): Polycondensation reaction

According to the present invention, step (4) is a step of subjecting the second reactant to polycondensation to obtain a third reactant comprising a polymer. Specifically, step (4) may comprise feeding the second reactant to a polycondensation reactor and carrying out a polycondensation reaction in the presence of a catalyst to produce a third reactant comprising a polyester (co)polymer.

The conditions under which the polycondensation reaction is carried out may not be particularly limited. Specifically, the temperature at which the polycondensation reaction is carried out may be 150 to 300°C, 180 to 295°C, 200 to 290°C, 230 to 285°C, or 260 to 285°C. The pressure under which the polycondensation reaction is carried out may be lower (reduced pressure) than normal pressure (e.g., 1 atm). In addition, the period of time during which the polycondensation reaction is carried out may be 1 to 24 hours, 2 to 20 hours, 3 to 15 hours, or 4 to 10 hours. As the polycondensation reaction is carried out under the above conditions, a polyester polymer (homopolymer or copolymer) having the desired intrinsic viscosity (IV) and color can be efficiently produced while by-products are smoothly discharged from the polycondensation reactor.

Step (4), in which the polycondensation reaction is carried out, is carried out subsequent to steps (1) to (3), and it may be carried out continuously together with steps (1) to (3).

Meanwhile, the present invention may further comprise subjecting the polyester polymer (third reactant) obtained through the polycondensation reaction in step (4) to a solid-state polymerization reaction in order to control the intrinsic viscosity (IV), molecular weight, and the like of the polyester polymer. The solid-state polymerization reaction conditions are not particularly limited and may be appropriately set depending on the intrinsic viscosity, molecular weight, and the like of the desired polyester polymer.

Step (5): Recovery and purification

According to the present invention, step (5) is a step of recovering and purifying glycol by-products formed in any one or more of steps (2) to (4). Specifically, step (5) may comprise recovering at least one of the glycol by-product formed in the first esterification reaction, the glycol by-product formed in the second esterification reaction, and the glycol by-product formed in the polycondensation reaction, and purifying it to obtain a purified product.

The glycol by-product may comprise at least one selected from the group consisting of ethylene glycol, diethylene glycol, monohydroxyethyl terephthalate (MHET), bis-2-hydroxyethyl terephthalate (BHET), bis-2-hydroxyethyl terephthalate dimer (BHET dimer), and diethylene glycol-ester (DEG-ester). The glycol by-product may be recovered and then subjected to a commonly known purification process, and the purified product (e.g., ethylene glycol) obtained through the purification process can be reused as a reaction raw material in step (1). As a result, the present invention can provide a polyester resin in an economical way.

**Polyester resin**

The present invention provides a polyester resin, which is prepared by the process for preparing a polyester resin described above. The polyester resin according to the present invention may be a homopolymer or a copolymer. Specifically, the polyester resin may be selected from the group consisting of polyethylene terephthalate (PET), polyethylene terephthalate glycol (PETG), polyester sulfone (PES), polybutylene terephthalate (PBT), polytrimethylene terephthalate (PTT), polybutylene adipate-co-terephthalate (PBAT), polypropylene adipate-co-terephthalate (PPAT), polycyclohexane dimethyl terephthalate (PCT), and thermoplastic polyester elastomer (TPEE).

Since the polyester resin according to the present invention is prepared through the preparation process described above, it can have high quality. In particular, the polyester resin according to the present invention can have excellent color characteristics (transparency) and moldability (injection moldability). Specifically, the polyester resin, in a pellet state, may have a col-b value of -4 to +3 (specifically, -3.8 to +2.8 or -3.5 to +2.5) and a delta col-b value of 0.1 or more (specifically, 0.1 to 2.5, 0.1 to 2.3, 0.4 to 2, 0.6 to 1.8, or 0.8 to 1.6).

Col-b is a color coordinate established by the Commission International d'Eclairage (CIE), where color is represented by "yellow to blue complementary color." It may be measured using UltraScan PRO (manufacturer: Hunterlab).

Delta col-b refers to the difference in col-b values depending on whether the reaction raw material is fed dividedly or all at once. When its value is 0.1 or more, it may mean that the color characteristics have been improved.

The polyester resin according to the present invention may have an intrinsic viscosity (IV) at 35°C of 0.50 to 1.25 dl/g. Specifically, the intrinsic viscosity of the polyester resin at 35°C may be 0.50 to 1.2 dl/g, 0.55 to 1.0 dl/g, 0.55 to 0.90 dl/g, 0.60 to 0.85 dl/g, or 0.65 to 0.80 dl/g. More specifically, the melt intrinsic viscosity (melt IV) of the polyester resin at 35°C may be 0.50 to 1.2 dl/g, 0.70 to 1.0 dl/g, or 0.75 to 0.90 dl/g. In addition, the solid-phase intrinsic viscosity (solid-phase IV) of the polyester resin at 35°C may be 0.7 to 1.25 dl/g, 0.90 to 1.20 dl/g, or 1.0 to 1.15 dl/g. The melt intrinsic viscosity is the intrinsic viscosity of the polyester resin measured when it is obtained after the polycondensation (melt polymerization) (before the solid-state polymerization). The solid-state intrinsic viscosity is the intrinsic viscosity of the polyester resin measured when it is obtained after the polycondensation (melt polymerization) and solid-state polymerization.

The intrinsic viscosity may be measured using an Ubbelohde-type viscometer in a constant temperature bath at 35°C. Specifically, a polyester resin is dissolved at a concentration of 0.12% in orthochlorophenol (OCP) at 150°C to obtain a solution. While the temperature of the viscosity tube in an Ubbelohde viscometer is maintained at 35°C, the time (efflux time) required for the OCP solvent to pass and the time required for the solution to pass, between specific internal sections of the viscosity tube, are each measured to obtain specific viscosity, which is used to calculate intrinsic viscosity.

The polyester resin according to the present invention may be in the form of chips, pellets, or powder (particles).

### Article

The present invention provides an article, which comprises the polyester resin described above. Specifically, the article according to the present invention may be obtained by molding the polyester resin using a molding method such as extrusion and injection. For example, the article according to the present invention may be a film (or sheet) or a component used in the field of automobiles, electricity, and electronics.

Specifically, the article according to the present invention may be an injection-molded polyester product (e.g., a polyester film) with excellent color characteristics. The injection-molded polyester product (e.g., polyester film), based on a thickness of 6 mm, may have a difference (x - y) between the col-L value (x) and the col-b value (y) (x - y) of 89 to 94 (specifically, 90 to 94, 90.5 to 94, 91 to 94, or 92 to 94). As the difference (x - y) between the col-L value (x) and the col-b value (y) is within the above range, the injection-molded polyester product of the present invention may have excellent transparency.

Col-L represents "brightness" in the color coordinate established by the Commission International d'Eclairage (CIE). It may be measured using UltraScan PRO (manufacturer: Hunterlab) like color-b.

### Mode for the Invention

Hereinafter, the present invention will be described in more detail with reference to embodiments. However, these examples are provided only for illustration purposes, and the present invention is not limited thereto.

### <Preparation of a polyester resin (copolymer)>

### [Example 1]

A reaction raw material comprising recycled bis-2-hydroxyethyl terephthalate (r-BHET), terephthalic acid (TPA), ethylene glycol (EG), isosorbide (ISB), and diethylene glycol (DEG) was prepared. A slurry in which the reaction raw material and other raw materials (catalyst, stabilizer, and colorant) were mixed was continuously supplied to a continuous reactor for first esterification. Specifically, recycled bis-2-hydroxyethyl terephthalate (r-BHET, 528.0 kg/hr), terephthalic acid (TPA, 1,380.2 kg/hr), ethylene glycol (EG, 429.6 kg/hr), isosorbide (ISB, 20.2 kg/hr), diethylene glycol (DEG, 22.0 kg/hr), a Ge catalyst (1.3 kg/hr), a Ti catalyst (0.19 kg/hr), phosphoric acid (0.208 kg/hr), a blue toner (0.008 kg/hr), and a red toner (0.002 kg/hr) were continuously fed to a continuous reactor for first esterification equipped with a column and a condenser that can be cooled by water. A first esterification reaction (ES-1) was carried out at 255°C under a pressure of 0.5 kgf/cm$^2$ for 1.5 hours to obtain a first reactant (G/A = 1.10).

Subsequently, the first reactant was fed to a continuous reactor for second esterification equipped with a column and a condenser that can be cooled by water, and a second esterification reaction (transesterification reaction) (ES-2) was carried out at a temperature of 260°C under a pressure of 0.5 kgf/cm$^2$ for 7 hours to obtain a second reactant. In such an event, the second esterification reaction was carried out while 1,4-cyclohexanedimethanol (CHDM, 149.7 kg/hr), which was not fed to the continuous reactor for first esterification, was continuously fed to the continuous reactor for second esterification.

Subsequently, the second reactant was fed to a polycondensation reactor, and a polycondensation reaction was carried out for 7 hours until the intrinsic viscosity (IV) reached 0.70 dl/g while the pressure of the polycondensation reactor was maintained at a pressure lower than normal pressure. When the intrinsic viscosity (IV) of the mixture in the polycondensation reactor reached the desired level, the mixture (third reactant) was then discharged to the outside of the reactor to form strands, which were solidified with a cooling liquid and then granulated to have an average weight of 12 to 14 mg.

Subsequently, the granules thus obtained were left at 150°C for 1 hour to be crystallized, which were then fed to a 20-liter reactor for solid-state polymerization. The solid-state polymerization reaction was carried out while flowing nitrogen at a rate of 50 L/minute. In such an event, the temperature of the solid-state polymerization reactor was raised from room temperature to 190°C at a rate of 40°C/hour and maintained at 190°C. The solid-state polymerization reaction was carried out until the intrinsic viscosity (IV) of the granules in the solid-state polymerization reactor reached 1.15 dl/g to prepare polyester resin (copolymer) pellets.

Meanwhile, the glycol by-products formed from each of the first esterification reaction, the second esterification reaction, and/or the polycondensation reaction were recovered through the column and condenser of each process, and reused as a reaction raw material through a separate purification process.

### [Example 2]

A reaction raw material comprising terephthalic acid (TPA), ethylene glycol (EG), 1,4-cyclohexanedimethanol (CHDM), diethylene glycol (DEG), and a cyclohexanedimethanol derivative (CHDM derivative) was prepared. A slurry in which the reaction raw material and other raw materials (catalyst, stabilizer, and colorant) were mixed was continuously supplied to a continuous reactor for first esterification. Specifically, terephthalic acid (TPA, 1,495.0 kg/hr), ethylene glycol (EG, 238.2 kg/hr), 1,4-cyclohexanedimethanol (CHDM, 713.2 kg/hr), diethylene glycol (DEG, 9.7 kg/hr), a cyclohexanedimethanol derivative (CHDM derivative, 40.0 kg/hr), zinc acetate (0.18 kg/hr), a Ge catalyst (2.7 kg/hr), a Ti catalyst (0.19 kg/hr), phosphoric acid (0.208 kg/hr), a blue toner (0.005 kg/hr), and a red toner (0.001 kg/hr) were continuously fed to a continuous reactor for first esterification equipped with a column and a condenser that can be cooled by water. A first esterification reaction (ES-1) was carried out at 275°C under a pressure of 2 kgf/cm$^2$ for 2.5 hours to obtain a first reactant (G/A = 0.95).

Subsequently, the first reactant was fed to a continuous reactor for second esterification equipped with a column and a condenser that can be cooled by water, and a second esterification reaction (transesterification reaction) (ES-2) was carried out at a temperature of 255°C under a pressure of 2 kgf/cm$^2$ for 5 hours to obtain a second reactant. In such an event, the second esterification reaction was carried out while isosorbide (ISB, 175.3 kg/hr), which was not fed to the continuous reactor for first esterification, was continuously fed to the continuous reactor for second esterification.

Subsequently, the second reactant was fed to a polycondensation reactor, and a polycondensation reaction was carried out for 10 hours until the intrinsic viscosity (IV) reached 0.70 dl/g while the pressure of the polycondensation reactor was maintained at a pressure lower than normal pressure. When the intrinsic viscosity (IV) of the mixture in the polycondensation reactor reached the desired level, the mixture (third reactant) was then discharged to the outside of the reactor to form strands, which were solidified with a cooling liquid and then granulated to have an average weight of about 12 to 14 mg to prepare polyester resin (copolymer) pellets.

Meanwhile, the glycol by-products formed from each of the first esterification reaction, the second esterification reaction, and/or the polycondensation reaction were recovered through the column and condenser of each process, and reused as a reaction raw material through a separate purification process.

**[Example 3]**

A reaction raw material comprising recycled bis-2-hydroxyethyl terephthalate (r-BHET), terephthalic acid (TPA), ethylene glycol (EG), 1,4-cyclohexanedimethanol (CHDM), isosorbide (ISB), and diethylene glycol (DEG) was prepared. A slurry in which the reaction raw material and other raw materials (catalyst, stabilizer, and colorant) were mixed was continuously supplied to a continuous reactor for first esterification. Specifically, recycled bis-2-hydroxyethyl terephthalate (r-BHET, 112.0 kg/hr), terephthalic acid (TPA, 1,390.9 kg/hr), ethylene glycol (EG, 47.4 kg/hr), 1,4-cyclohexanedimethanol (CHDM, 889.1 kg/hr), isosorbide (ISB, 226.6 kg/hr), diethylene glycol (DEG, 9.3 kg/hr), zinc acetate (0.88 kg/hr), a Ge catalyst (13.3 kg/hr), phosphoric acid (0.042 kg/hr), a blue toner (0.006 kg/hr), and a red toner (0.002 kg/hr) were continuously fed to a continuous reactor for first esterification equipped with a column and a condenser that can be cooled by water. A first esterification reaction (ES-1) was carried out at 275°C under a pressure of 1 kgf/cm$^2$ for 1.5 hours to obtain a first reactant (G/A = 1.07).

Subsequently, the first reactant was fed to a continuous reactor for second esterification equipped with a column and a condenser that can be cooled by water, and a second esterification reaction (transesterification reaction) (ES-2) was carried out at a temperature of 265°C under a pressure of 1 kgf/cm$^2$ for 4 hours to obtain a second reactant. In such an event, the second esterification reaction was carried out while isosorbide (ISB, 151.1 kg/hr) was continuously fed to the continuous reactor for second esterification in a divided (distributed) manner.

Subsequently, the second reactant was fed to a polycondensation reactor, and a polycondensation reaction was carried out for 6 hours until the intrinsic viscosity (IV) reached 0.75 dl/g while the pressure of the polycondensation reactor was maintained at a pressure lower than normal pressure. When the intrinsic viscosity (IV) of the mixture in the polycondensation reactor reached the desired level, the mixture (third reactant) was then discharged to the outside of the reactor to form strands, which were solidified with a cooling liquid and then granulated to have an average weight of about 12 to 14 mg to prepare polyester resin (copolymer) pellets.

Meanwhile, the glycol by-products formed from each of the first esterification reaction, the second esterification reaction, and/or the polycondensation reaction were recovered through the column and condenser of each process, and reused as a reaction raw material through a separate purification process.

**[Example 4]**

A reaction raw material comprising terephthalic acid (TPA), ethylene glycol (EG), 1,4-cyclohexanedimethanol (CHDM), diethylene glycol (DEG), and a cyclohexanedimethanol derivative (CHDM derivative) was prepared. A slurry in which the reaction raw material and other raw materials (catalyst, stabilizer, and colorant) were mixed was continuously supplied to a continuous reactor for first esterification. Specifically, terephthalic acid (TPA, 1,633.4 kg/hr), ethylene glycol (EG, 390.5 kg/hr), 1,4-cyclohexanedimethanol (CHDM, 354.2 kg/hr), diethylene glycol (DEG, 15.6 kg/hr), a cyclohexanedimethanol derivative (CHDM derivative, 86.2 kg/hr), a Ge catalyst (1.3 kg/hr), phosphoric acid (0.208 kg/hr), a blue toner (0.010 kg/hr), and a red toner (0.004 kg/hr) were continuously fed to a continuous reactor for first esterification equipped with a column and a condenser that can be cooled by water. A first esterification reaction (ES-1) was carried out at 255°C under a pressure of 0.5 kgf/cm$^2$ for 2.5 hours to obtain a first reactant (G/A = 0.97).

Subsequently, the first reactant was fed to a continuous reactor for second esterification equipped with a column and a condenser that can be cooled by water, and a second esterification reaction (transesterification reaction) (ES-2) was carried out at a temperature of 260°C under a pressure of 0.5 kgf/cm$^2$ for 8 hours to obtain a second reactant. In such an event, the second esterification reaction was carried out while diethylene glycol (DEG, 140.8 kg/hr) was continuously fed to the continuous reactor for second esterification in a divided (distributed) manner.

Subsequently, the second reactant was fed to a polycondensation reactor, and a polycondensation reaction was carried out for 9 hours until the intrinsic viscosity (IV) reached 0.77 dl/g while the pressure of the polycondensation reactor was maintained at a pressure lower than normal pressure. When the intrinsic viscosity (IV) of the mixture in the polycondensation reactor reached the desired level, the mixture (third reactant) was then discharged to the outside of the reactor to form strands, which were solidified with a cooling liquid and then granulated to have an average weight of about 12 to 14 mg to prepare polyester resin (copolymer) pellets.

Meanwhile, the glycol by-products formed from each of the first esterification reaction, the second esterification reaction, and/or the polycondensation reaction were recovered through the column and condenser of each process, and reused as a reaction raw material through a separate purification process.

**[Example 5]**

A reaction raw material comprising recycled bis-2-hydroxyethyl terephthalate (r-BHET), terephthalic acid (TPA), isophthalic acid (IPA), ethylene glycol (EG), 1,4-cyclohexanedimethanol (CHDM), and diethylene glycol (DEG) was prepared. A slurry in which the reaction raw material and other raw materials (catalyst, stabilizer, and colorant) were mixed was continuously supplied to a continuous reactor for first esterification. Specifically, recycled bis-2-hydroxyethyl terephthalate (r-BHET, 955.3 kg/hr), terephthalic acid (TPA, 936.5 kg/hr), isophthalic acid (IPA, 624.3 kg/hr), ethylene glycol (EG, 104.9 kg/hr), 1,4-cyclohexanedimethanol (CHDM, 118.5 kg/hr), diethylene glycol (DEG, 19.9 kg/hr), zinc acetate (0.58 kg/hr), a Ti catalyst (0.19 kg/hr), phosphoric acid (2.083 kg/hr), and a blue toner (0.010 kg/hr) were continuously fed to a continuous reactor for first esterification equipped with a column and a condenser that can be cooled by water. A first esterification reaction (ES-1) was carried out at 255°C under a pressure of 3 kgf/cm$^2$ for 1 hour to obtain a first reactant (G/A = 1.09).

Subsequently, the first reactant was fed to a continuous reactor for second esterification equipped with a column and a condenser that can be cooled by water, and a second esterification reaction (transesterification reaction) (ES-2) was carried out at a temperature of 260°C under a pressure of 3 kgf/cm$^2$ for 5 hours to obtain a second reactant. In such an event, the second esterification reaction was carried out while 1,4-cyclohexanedimethanol (CHDM, 355.4 kg/hr) was continuously fed to the continuous reactor for second esterification in a divided (distributed) manner.

Subsequently, the second reactant was fed to a polycondensation reactor, and a polycondensation reaction was carried out for 4 hours until the intrinsic viscosity (IV) reached 0.65 dl/g while the pressure of the polycondensation reactor was maintained at a pressure lower than normal pressure. When the intrinsic viscosity (IV) of the mixture in the polycondensation reactor reached the desired level, the mixture (third reactant) was then discharged to the outside of the reactor to form strands, which were solidified with a cooling liquid and then granulated to have an average weight of about 12 to 14 mg to prepare polyester resin (copolymer) pellets.

Meanwhile, the glycol by-products formed from each of the first esterification reaction, the second esterification reaction, and/or the polycondensation reaction were recovered through the column and condenser of each process, and reused as a reaction raw material through a separate purification process.

**[Example 6]**

A reaction raw material comprising recycled bis-2-hydroxyethyl terephthalate (r-BHET), terephthalic acid (TPA), isophthalic acid (IPA), ethylene glycol (EG), 1,4-cyclohexanedimethanol (CHDM), and diethylene glycol (DEG) was prepared. A slurry in which the reaction raw material and other raw materials (catalyst, stabilizer, and colorant) were mixed was continuously supplied to a continuous reactor for first esterification. Specifically, recycled bis-2-hydroxyethyl terephthalate (r-BHET, 971.2 kg/hr), terephthalic acid (TPA, 952.1 kg/hr), isophthalic acid (IPA, 634.7 kg/hr), ethylene glycol (EG, 4.0 kg/hr), 1,4-cyclohexanedimethanol (CHDM, 688.3 kg/hr), diethylene glycol (DEG, 10.1 kg/hr), zinc acetate (0.29 kg/hr), a Ge catalyst (1.3 kg/hr), a blue toner (0.010 kg/hr), and a red toner (0.004 kg/hr) were continuously fed to a continuous reactor for first esterification equipped with a column and a condenser that can be cooled by water. A first esterification reaction (ES-1) was carried out at 255°C under a pressure of 0.5 kgf/cm$^2$ for 3 hours to obtain a first reactant (G/A = 0.92).

Subsequently, the first reactant was fed to a continuous reactor for second esterification equipped with a column and a condenser that can be cooled by water, and a second esterification reaction (transesterification reaction) (ES-2) was carried out at a temperature of 260°C under a pressure of 3 kgf/cm$^2$ for 5 hours to obtain a second reactant. In such an event, the second esterification reaction was carried out while isosorbide (ISB, 718.9 kg/hr), which was not fed to the continuous reactor for first esterification, was continuously fed to the continuous reactor for second esterification.

Subsequently, the second reactant was fed to a polycondensation reactor, and a polycondensation reaction was carried out for 4 hours until the intrinsic viscosity (IV) reached 0.68 dl/g while the pressure of the polycondensation reactor was maintained at a pressure lower than normal pressure. When the intrinsic viscosity (IV) of the mixture in the polycondensation reactor reached the desired level, the mixture (third reactant) was then discharged to the outside of the reactor to form strands, which were solidified with a cooling liquid and then granulated to have an average weight of about 12 to 14 mg to prepare polyester resin (copolymer) pellets.

Meanwhile, the glycol by-products formed from each of the first esterification reaction, the second esterification reaction, and/or the polycondensation reaction were recovered through the column and condenser of each process, and reused as a reaction raw material through a separate purification process.

## [Example 7]

A reaction raw material comprising recycled bis-2-hydroxyethyl terephthalate (r-BHET), terephthalic acid (TPA), ethylene glycol (EG), 1,4-cyclohexanedimethanol (CHDM), and diethylene glycol (DEG) was prepared. A slurry in which the reaction raw material and other raw materials (catalyst, stabilizer, and colorant) were mixed was continuously supplied to a continuous reactor for first esterification. Specifically, recycled bis-2-hydroxyethyl terephthalate (r-BHET, 438.0 kg/hr), terephthalic acid (TPA, 667.9 kg/hr), ethylene glycol (EG, 188.9 kg/hr), 1,4-cyclohexanedimethanol (CHDM, 198.6 kg/hr), diethylene glycol (DEG, 12.2 kg/hr), zinc acetate (0.11 kg/hr), a Ge catalyst (0.8 kg/hr), phosphoric acid (0.025 kg/hr), a blue toner (0.004 kg/hr), and a red toner (0.001 kg/hr) were continuously fed to a continuous reactor for first esterification equipped with a column and a condenser that can be cooled by water. A first esterification reaction (ES-1) was carried out at 255°C under a pressure of 0.5 kgf/cm$^2$ for 3 hours to obtain a first reactant (G/A = 1.39).

Subsequently, the first reactant was fed to a continuous reactor for second esterification equipped with a column and a condenser that can be cooled by water, and a second esterification reaction (transesterification reaction) (ES-2) was carried out at a temperature of 265°C under a pressure of 1 kgf/cm$^2$ for 5 hours to obtain a second reactant. In such an event, the second esterification reaction was carried out while 1,4-cyclohexanedimethanol (CHDM, 49.7 kg/hr) was continuously fed to the continuous reactor for second esterification in a divided (distributed) manner.

Subsequently, the second reactant was fed to a polycondensation reactor, and a polycondensation reaction was carried out for 5 hours until the intrinsic viscosity (IV) reached 0.70 dl/g while the pressure of the polycondensation reactor was maintained at a pressure lower than normal pressure. When the intrinsic viscosity (IV) of the mixture in the polycondensation reactor reached the desired level, the mixture (third reactant) was then discharged to the outside of the reactor to form strands, which were solidified with a cooling liquid and then granulated to have an average weight of about 12 to 14 mg to prepare polyester resin (copolymer) pellets.

Meanwhile, the glycol by-products formed from each of the first esterification reaction, the second esterification reaction, and/or the polycondensation reaction were recovered through the column and condenser of each process, and reused as a reaction raw material through a separate purification process.

## [Example 8]

A reaction raw material comprising recycled bis-2-hydroxyethyl terephthalate (r-BHET), terephthalic acid (TPA), ethylene glycol (EG), 1,4-cyclohexanedimethanol (CHDM), and diethylene glycol (DEG) was prepared. A slurry in which the reaction raw material and other raw materials (catalyst, stabilizer, and colorant) were mixed was continuously supplied to a continuous reactor for first esterification. Specifically, recycled bis-2-hydroxyethyl terephthalate (r-BHET, 485.6 kg/hr), terephthalic acid (TPA, 1,269.5 kg/hr), ethylene glycol (EG, 148.0 kg/hr), 1,4-cyclohexanedimethanol (CHDM, 688.3 kg/hr), diethylene glycol (DEG, 10.1 kg/hr), zinc acetate (0.29 kg/hr), a Ge catalyst (1.3 kg/hr), a blue toner (0.010 kg/hr), and a red toner (0.004 kg/hr) were continuously fed to a continuous reactor for first esterification equipped with a column and a condenser that can be cooled by water. A first esterification reaction (ES-1) was carried out at 255°C under a pressure of 0.5 kgf/cm$^2$ for 3 hours to obtain a first reactant (G/A = 0.98).

Subsequently, the first reactant was fed to a continuous reactor for second esterification equipped with a column and a condenser that can be cooled by water, and a second esterification reaction (transesterification reaction) (ES-2) was carried out at a temperature of 260°C under a pressure of 3 kgf/cm$^2$ for 5 hours to obtain a second reactant. In such an event, the second esterification reaction was carried out while ethylene glycol (EG, 93 kg/hr) was continuously fed to the continuous reactor for second esterification in a divided (distributed) manner.

Subsequently, the second reactant was fed to a polycondensation reactor, and a polycondensation reaction was carried out for 4 hours until the intrinsic viscosity (IV) reached 0.68 dl/g while the pressure of the polycondensation reactor was maintained at a pressure lower than normal pressure. When the intrinsic viscosity (IV) of the mixture in the polycondensation reactor reached the desired level, the mixture (third reactant) was then discharged to the outside of the reactor to form strands, which were solidified with a cooling liquid and then granulated to have an average weight of about 12 to 14 mg to prepare polyester resin (copolymer) pellets.

Meanwhile, the glycol by-products formed from each of the first esterification reaction, the second esterification reaction, and/or the polycondensation reaction were recovered through the column and condenser of each process, and reused as a reaction raw material through a separate purification process.

## [Comparative Example 1]

A reaction raw material comprising recycled bis-2-hydroxyethyl terephthalate (r-BHET), terephthalic acid (TPA), ethylene glycol (EG), 1,4-cyclohexanedimethanol (CHDM), isosorbide (ISB), and a cyclohexanedimethanol derivative (CHDM derivative) was prepared. A slurry in which the reaction raw material and other raw materials (catalyst, stabilizer, and colorant) were mixed was continuously supplied to a continuous reactor for first esterification. Specifically, recycled bis-2-hydroxyethyl terephthalate (r-BHET, 139.1 kg/hr), terephthalic acid (TPA, 818.2 kg/hr), ethylene glycol (EG, 176.6 kg/hr), 1,4-cyclohexanedimethanol (CHDM, 433.8 kg/hr), isosorbide (ISB, 159.9 kg/hr), a cyclohexanedimethanol derivative (CHDM derivative, 24.0 kg/hr), a Ge catalyst (1.6 kg/hr), a Ti catalyst (0.11 kg/hr), phosphoric acid (0.125 kg/hr), a blue toner (0.003 kg/hr), and a red toner (0.001 kg/hr) were continuously fed to a continuous reactor for first esterification equipped with a column and a condenser that can be cooled by water. A first esterification reaction (ES-1) was carried out at 250°C under a pressure of 2 kgf/cm$^2$ for 2 hours to obtain a first reactant (G/A = 1.30).

Subsequently, the first reactant was fed to a continuous reactor for second esterification equipped with a column and a condenser that can be cooled by water, and a second esterification reaction (transesterification reaction) (ES-2) was carried out at a temperature of 255°C under a pressure of 2 kgf/cm$^2$ for 5 hours to obtain a second reactant.

Subsequently, the second reactant was fed to a polycondensation reactor, and a polycondensation reaction was carried out for 10 hours until the intrinsic viscosity (IV) reached 0.80 dl/g while the pressure of the polycondensation reactor was maintained at a pressure lower than normal pressure. When the intrinsic viscosity (IV) of the mixture in the polycondensation reactor reached the desired level, the mixture (third reactant) was then discharged to the outside of the reactor to form strands, which were solidified with a cooling liquid and then granulated to have an average weight of about 12 to 14 mg to prepare polyester resin (copolymer) pellets.

Meanwhile, the glycol by-products formed from each of the first esterification reaction, the second esterification reaction, and/or the polycondensation reaction were recovered through the column and condenser of each process, and reused as a reaction raw material through a separate purification process.

## [Comparative Example 2]

A reaction raw material comprising recycled bis-2-hydroxyethyl terephthalate (r-BHET), terephthalic acid (TPA), ethylene glycol (EG), 1,4-cyclohexanedimethanol (CHDM), isosorbide (ISB), and diethylene glycol (DEG) was prepared. A slurry in which the reaction raw material and other raw materials (catalyst, stabilizer, and colorant) were mixed was continuously supplied to a continuous reactor for first esterification. Specifically, recycled bis-2-hydroxyethyl terephthalate (r-BHET, 437.0 kg/hr), terephthalic acid (TPA, 666.5 kg/hr), ethylene glycol (EG, 73.5 kg/hr), 1,4-cyclohexanedimethanol (CHDM, 413.0 kg/hr), isosorbide (ISB, 279.1 kg/hr), diethylene glycol (DEG, 6.1 kg/hr), zinc acetate (0.11 kg/hr), a Ge catalyst (0.8 kg/hr), phosphoric acid (0.025 kg/hr), a blue toner (0.004 kg/hr), and a red toner (0.001 kg/hr) were continuously fed to a continuous reactor for first esterification equipped with a column and a condenser that can be cooled by water. A first esterification reaction (ES-1) was carried out at 260°C under a pressure of 1 kgf/cm$^2$ for 2.5 hours to obtain a first reactant (G/A = 1.25).

Subsequently, the first reactant was fed to a continuous reactor for second esterification equipped with a column and a condenser that can be cooled by water, and a second esterification reaction (transesterification reaction) (ES-2) was carried out at a temperature of 265°C under a pressure of 1 kgf/cm$^2$ for 5 hours to obtain a second reactant.

Subsequently, the second reactant was fed to a polycondensation reactor, and a polycondensation reaction was carried out for 5 hours until the intrinsic viscosity (IV) reached 0.70 dl/g while the pressure of the polycondensation reactor was maintained at a pressure lower than normal pressure. When the intrinsic viscosity (IV) of the mixture in the polycondensation reactor reached the desired level, the mixture (third reactant) was then discharged to the outside of the reactor to form strands, which were solidified with a cooling liquid and then granulated to have an average weight of about 12 to 14 mg to prepare polyester resin (copolymer) pellets.

Meanwhile, the glycol by-products formed from each of the first esterification reaction, the second esterification reaction, and/or the polycondensation reaction were recovered through the column and condenser of each process, and reused as a reaction raw material through a separate purification process.

**[Test Example** 1]

The rate of change in molecular weight ($M_{RC}$) of the first and second reactants obtained through the first and second esterification reactions, respectively, was calculated according to the following Equation 1. The results are shown in Table 1 below. Here, the number average molecular weight of the oligomer contained in each reactant was analyzed by gel permeation chromatography (GPC) using polystyrene as a standard material.

$$[Equation\ 1]$$

$$M_{RC} = (Mn_1 / Mn_2) \times 100$$

$Mn_1$ is the number average molecular weight of the oligomer contained in the first reactant obtained through the first esterification reaction, and $Mn_2$ is the number average molecular weight of the oligomer contained in the second reactant obtained through the second esterification reaction.

[Table 1]

|  | Feeding of the second glycol component dividedly or all at once | Mn of oligomer of the first reactant | Mn of oligomer of the second reactant | Rate of change in molecular weight (%) |
|---|---|---|---|---|
| Ex. 1 | CHDM fed all at once | 1,030 | 1,000 | 103 |
| Ex. 2 | ISB fed all at once | 1,150 | 1,150 | 100 |
| Ex. 3 | ISB fed dividedly | 900 | 985 | 91 |
| Ex. 4 | DEG fed dividedly | 950 | 950 | 100 |
| Ex. 5 | CHDM fed dividedly | 1,600 | 1,100 | 145 |
| Ex. 6 | ISB fed all at once | 2,600 | 1,200 | 217 |
| Ex. 7 | CHDM fed dividedly | 850 | 1,000 | 85 |
| Ex. 8 | EG fed dividedly | 900 | 1,100 | 82 |
| C. Ex. 1 | No feeding dividedly or all at once | 500 | 850 | 59 |
| C. Ex. 2 | No feeding dividedly or all at once | 600 | 900 | 67 |

Referring to Table 1 above, as the second glycol component (CHDM, ISB, DEG, or EG) was fed dividedly in the first and second esterification reactions or all at once in the second esterification reaction, the residence time of the second glycol component was shortened, which reduced the side reactions caused by heat. As a result, an oligomer was well formed with almost no change in molecular weight.

**<Preparation of a polyester article>**

**[Preparation Examples 1 to 8 and Comparative Preparation Examples 1 and 2]**

The polyester resin pellets obtained in Examples 1 to 8 and Comparative Examples 1 to 2 were injection-molded in a conventional manner to prepare polyester injection specimens with a thickness of 6 mm (6 T).

**[Test Example 2]**

The polyester resin pellets obtained in Examples 1 to 8 and Comparative Examples 1 to 2 and the injection-molded polyester specimens obtained in Preparation Examples 1 to 8 and Comparative Preparation Examples 1 to 2 were each analyzed for color. The results are shown in Table 2 below. Specifically, chromaticity and brightness of the pellets and injection-molded specimens were each measured using a Varian Cary 5 UV/Vis/NIR spectrophotometer equipped with a diffuse reflection accessory. Next, transmission data were obtained with Illuminant D65 at an observer's angle of 2°, which were processed through the color analysis device within the Grams/32 software to calculate the Hunter Lab values. Here, pellet delta col-b refers to the difference between the col-b value of the pellets obtained by feeding the second glycol component dividedly or all at once and the col-b value of the pellets obtained by feeding the second glycol component all at once in the beginning of the reaction.

[Table 2]

| | Pellet col-b | Pellet delta col-b | 6-T injection-molded specimen col L-b |
|---|---|---|---|
| Ex. 1 | -4.0 | 0.70 | - |
| Ex. 2 | -2.1 | 1.50 | - |
| Ex. 3 | 1.2 | 1.00 | - |
| Ex. 4 | 2.7 | 0.15 | - |
| Ex. 5 | -0.8 | 0.50 | - |
| Ex. 6 | -1.5 | 2.00 | - |
| Ex. 7 | 0.0 | 0.10 | - |
| Ex. 8 | -0.2 | 0.10 | - |
| C. Ex. 1 | 1.2 | 0.00 | - |
| C. Ex. 2 | 0.5 | 0.00 | - |
| Prep. Ex. 1 | - | - | 94.0 |
| Prep. Ex. 2 | - | - | 92.7 |
| Prep. Ex. 3 | - | - | 90.7 |
| Prep. Ex. 4 | - | - | 90.7 |
| Prep. Ex. 5 | - | - | 93.5 |
| Prep. Ex. 6 | - | - | 91.3 |
| Prep. Ex. 7 | - | - | 90.5 |
| Prep. Ex. 8 | - | - | 90.0 |
| C. Prep. Ex. 1 | - | - | 90.3 |
| C. Prep. Ex. 2 | - | - | 89.0 |
| Pellet delta col-b = (col-b value of each of Examples 1 to 8) - (col-b value of Comparative Example 1) 6 T injection-molded specimen col L-b = (6 T film col-L value) - (6 T film col-b value) | | | |

Referring to Table 2 above, the polyester resin pellets obtained according to the present invention and the injection-molded polyester specimens prepared using the same had excellent color stability and, thus, high quality.

**Claims**

1.   A process for preparing a polyester resin, which comprises:

> (1) preparing a reaction raw material comprising a first glycol component and an acid component;
> (2) subjecting the reaction raw material to a first esterification reaction to obtain a first reactant; and
> (3) subjecting the first reactant to a second esterification reaction to obtain a second reactant,

wherein at least one second glycol component having a carbon number of 2 or more is fed dividedly throughout steps (1) to (3), or fed dividedly throughout steps (2) and (3), or fed all at once in steps (3).

2.   The process for preparing a polyester resin of claim 1, wherein the second glycol component is selected from the group consisting of bis-2-hydroxyethyl terephthalate, recycled bis-2-hydroxyethyl terephthalate, isosorbide, recycled isosorbide, diethylene glycol, 1,3-propanediol, 1,4-butanediol, 1,4-cyclohexanedimethanol, recycled 1,4-cyclohexanedimethanol, 2-methyl-1,3-propanediol, 2-ethyl-1,3-propanediol, 2-isopropyl-1,3-propanediol, 2,2-dimethyl-1,3-propanediol, recycled 2,2-dimethyl-1,3-propanediol, 2,3-butanediol, 3-methyl-1,5-pentanediol, 3-methyl-2,4-pentanediol, 1,6-hexanediol, 1,2-cyclohexanediol, 1,4-cyclohexanediol, cyclohexanedimethanol derivatives, 2,2,4,4-tetramethyl-1,3-cyclobutanediol, polyethylene glycol, polypropylene glycol, polytetramethylene glycol, polyhexamethylene glycol, copolymers of ethylene oxide and tetrahydrofuran, ethylene oxide-adducted polypropylene glycol, polycarbonate diol, polyneopentyl glycol, poly-3-methylpentanediol, and poly-1,5-pentanediol.

3. The process for preparing a polyester resin of claim 2, wherein the second glycol component is selected from the group consisting of bis-2-hydroxyethyl terephthalate, recycled bis-2-hydroxyethyl terephthalate, isosorbide, diethylene glycol, and 1,4-cyclohexanedimethanol.

4. The process for preparing a polyester resin of claim 1, wherein (the molar ratio of the first glycol component + the molar ratio of the second glycol component)/the molar ratio of the acid component (G/A) in the first esterification reaction of step (2) is 1.2 or less.

5. The process for preparing a polyester resin of claim 1, wherein the first esterification reaction in step (2) is carried out at 120 to 280°C.

6. The process for preparing a polyester resin of claim 1, wherein the second esterification reaction in step (3) is carried out at 150 to 280°C.

7. The process for preparing a polyester resin of claim 1, wherein the rate of change in molecular weight ($M_{RC}$) of the reactant is 90% or more according to the following Equation 1:

$$[\text{Equation 1}]$$

$$M_{RC} = (Mn_1 / Mn_2) \times 100$$

$Mn_1$ is the number average molecular weight of the oligomer contained in the first reactant, and $Mn_2$ is the number average molecular weight of the oligomer contained in the second reactant.

8. The process for preparing a polyester resin of claim 1, which further comprises (4) subjecting the second reactant to polycondensation to obtain a third reactant comprising a polymer.

9. The process for preparing a polyester resin of claim 8, which further comprises (5) recovering and purifying a glycol by-product formed in any one or more of steps (2) to (4).

10. The process for preparing a polyester resin of claim 1, wherein steps (1) to (3) are continuously carried out.

11. A polyester resin, which is prepared by the process according to any one of claims 1 to 10.

12. The polyester resin of claim 11, which, in a pellet state, has a col-b value of -4 to +3 and a delta col-b value of 0.1 or more.

13. An article, which comprises the polyester resin of claim 11.

14. The article of claim 13, wherein the article is an injection-molded polyester product, and the injection-molded polyester product, based on a thickness of 6 mm, has a difference between the col-L value and the col-b value of 89 to 94.

[Fig. 1]

```
┌─────────────────────────────┐
│   Preparing a reaction raw  │◄──────────────────────┐
│           material          │                        │
└──────────────┬──────────────┘                        │
               │                                        │
               ▼                                        │
┌─────────────────────────────┐                        │
│  First esterification reaction ├──────────┐          │
│           (ES-1)            │              │          │
└──────────────┬──────────────┘              │          │
               │                             ▼          │
               ▼                    ┌──────────────────┐
┌─────────────────────────────┐    │   Recovery and   │
│    Second esterification    ├───►│ purification of  │
│       reaction (ES-2)       │    │   by-products    │
└──────────────┬──────────────┘    └────────▲─────────┘
               │                            │
               ▼                            │
┌─────────────────────────────┐             │
│  Polycondensation reaction  ├─────────────┘
│            (PA)             │
└──────────────┬──────────────┘
               │
               ▼
┌─────────────────────────────┐
│  Obtaining a polyester resin │
└─────────────────────────────┘
```

## INTERNATIONAL SEARCH REPORT

| International application No. |
| --- |
| **PCT/KR2024/001010** |

**A. CLASSIFICATION OF SUBJECT MATTER**

**C08G 63/78**(2006.01)i; **C08G 63/16**(2006.01)i; **C08L 67/02**(2006.01)i

According to International Patent Classification (IPC) or to both national classification and IPC

**B. FIELDS SEARCHED**

Minimum documentation searched (classification system followed by classification symbols)

C08G 63/78(2006.01); C08G 63/12(2006.01); C08G 63/60(2006.01); C08G 63/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에스테르(polyester), 에스테르화(esterification), 글리콜(glycol), 회수 (collect), 정제(purification)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2007-254660 A (TOYOBO CO., LTD.) 04 October 2007 (2007-10-04) See claim 1; and paragraphs [0026], [0030]-[0035], [0039], [0043], [0083]-[0084], [0135] and [0136]. | 1-14 |
| A | KR 10-2014-0018468 A (SAMSUNG FINE CHEMICALS CO., LTD.) 13 February 2014 (2014-02-13) See entire document. | 1-14 |
| A | KR 10-2014-0024503 A (SAMSUNG FINE CHEMICALS CO., LTD.) 03 March 2014 (2014-03-03) See entire document. | 1-14 |
| A | KR 10-2022-0055192 A (SK CHEMICALS CO., LTD.) 03 May 2022 (2022-05-03) See entire document. | 1-14 |
| A | CN 101429275 A (JIANGSU SHENGHONG CHEMICAL FIBER CO., LTD.) 13 May 2009 (2009-05-13) See entire document. | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 April 2024** | **24 April 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 667 508 A1

## INTERNATIONAL SEARCH REPORT
### Information on patent family members

International application No.

**PCT/KR2024/001010**

| Patent document cited in search report | | | Publication date (day/month/year) | Patent family member(s) | | | Publication date (day/month/year) |
|---|---|---|---|---|---|---|---|
| JP | 2007-254660 | A | 04 October 2007 | JP | 4867421 | B2 | 01 February 2012 |
| KR | 10-2014-0018468 | A | 13 February 2014 | AU | 2013-297329 | A1 | 20 November 2014 |
| | | | | AU | 2013-297329 | B2 | 14 July 2016 |
| | | | | CN | 104487482 | A | 01 April 2015 |
| | | | | CN | 104487482 | B | 12 April 2017 |
| | | | | EP | 2881415 | A1 | 10 June 2015 |
| | | | | JP | 2015-523453 | A | 13 August 2015 |
| | | | | TW | 201410734 | A | 16 March 2014 |
| | | | | TW | I606078 | B | 21 November 2017 |
| | | | | US | 2015-0152218 | A1 | 04 June 2015 |
| | | | | US | 9187595 | B2 | 17 November 2015 |
| | | | | WO | 2014-021543 | A1 | 06 February 2014 |
| KR | 10-2014-0024503 | A | 03 March 2014 | AU | 2013-303463 | A1 | 05 February 2015 |
| | | | | AU | 2013-303463 | B2 | 13 October 2016 |
| | | | | CN | 104583270 | A | 29 April 2015 |
| | | | | CN | 104583270 | B | 29 June 2016 |
| | | | | EP | 2886579 | A1 | 24 June 2015 |
| | | | | JP | 2015-524871 | A | 27 August 2015 |
| | | | | JP | 6218831 | B2 | 25 October 2017 |
| | | | | TW | 201408717 | A | 01 March 2014 |
| | | | | TW | I606077 | B | 21 November 2017 |
| | | | | US | 2015-0158974 | A1 | 11 June 2015 |
| | | | | WO | 2014-027736 | A1 | 20 February 2014 |
| KR | 10-2022-0055192 | A | 03 May 2022 | CN | 116348527 | A | 27 June 2023 |
| | | | | EP | 4234607 | A1 | 30 August 2023 |
| | | | | JP | 2023-546948 | A | 08 November 2023 |
| | | | | KR | 10-2583652 | B1 | 26 September 2023 |
| | | | | TW | 202225257 | A | 01 July 2022 |
| | | | | US | 2024-0002593 | A1 | 04 January 2024 |
| | | | | WO | 2022-092558 | A1 | 05 May 2022 |
| CN | 101429275 | A | 13 May 2009 | None | | | |

Form PCT/ISA/210 (patent family annex) (July 2022)

**EP 4 667 508 A1**

**Patent documents cited in the description**

- KR 20140071536